# EUROPEAN PATENT APPLICATION

(11) **EP 4 763 318 A1**
(43) Date of publication of application: **24.06.2026**
(21) Application number: 24220769.4
(22) Date of filing: 17.12.2024
(51) Int. Cl.: B01D 63/08, B01D 69/10

(54) **FILTRATION DEVICE, IN PARTICULAR SMALL-SCALE FILTRATION DEVICE FOR PRODUCTION OF BIOPHARMACEUTICALS, AND METHOD OF MANUFACTURING SUCH A FILTRATION DEVICE**

(71) Applicant: Sartorius Stedim Biotech GmbH, 37079 Göttingen (DE)
(72) Inventor: PURSHOUSE, Martin, Stonehouse, GL10 3UT (GB); JAKOB, Fabian, 37079 Göttingen (DE); FRIESE, Thomas, 37079 Göttingen (DE)
(74) Representative: Prinz & Partner mbB

(57) **Abstract**

A filtration device (10), in particular a small-scale filtration device for production of biopharmaceuticals, comprises a top cover (12) having an unfiltrate inlet and a bottom cover (16) having a filtrate outlet (20), and one or more filter supports (23) arranged as a stack between the top cover (12) and the bottom cover (16) along a vertical direction (A). Each filter support (22) is configured to support a flat filter (24), especially a membrane. The filter support(s) (23) are provided on the top cover (12) and/or on the bottom cover (16) and or on one or more optional, preferably disc-shaped, filter support plates (22). The top cover (12), the bottom cover (16) and the filter support plates (22) each have an inner portion with at least one inner welding section (26) and an outer portion with at least one outer welding section (28). The inner welding sections (26) have an annular shape fully encircling a vertical filtrate collection channel (30) of the filtration device (10) which leads to the filtrate outlet (20). The outer welding sections (28) have an annular shape fully encircling a filtration area of the filtration device (10). All inner welding sections (26) are substantially congruent and welded in a fluid-tight manner to a corresponding inner welding section (26) of the top cover (12) or bottom cover (16) or a neighboring filter support plate (22), so as to form an inner housing portion (32) of the filtration device (10). All outer welding sections (28) are substantially congruent and welded in a fluid-tight manner to a corresponding outer welding section (28) of the top cover (12) or bottom cover (16) or a neighboring filter support plate (22), so as to form an outer housing portion (34) of the filtration device (10).

## Description

The invention relates to a filtration device, in particular a small-scale filtration device for production of biopharmaceuticals. The invention further relates to a method of manufacturing such a filtration device.

In the context of the present invention, a small-scale filtration device is to be understood as a device that is used for small batches, ranging from some milliliters to a few liters, with an effective filter area of about 5 to 100 cm². For example, an intravenous medication of such small volume, particularly a medication of advanced therapies like gene therapy medicine customized sometimes for only a single patient, may be filtered by a small-scale filtration device just before it is given to a patient. However, the concept of the invention may also be applied to larger filtration devices with an effective filter area of up to 300 cm² or even more.

In filtration processes for production of biopharmaceuticals, filtration devices need to withstand high pressures. The design of the filtration devices must therefore be adapted to these pressures. This can be a challenge, especially with smaller devices. The best way to achieve a high burst strength (resistance to high pressure) is to use a housing for the filtration device with a round, sphere-like structure, as this leads to a most even distribution of forces. Unfortunately, such a structure is opposed to a low inner volume of the device. Therefore, some devices have a supporting outer housing that is round-shaped and welded onto an inner housing to lead pressure forces from the inner low volume housing into the outer round-shaped housing. An example of such a filter device is shown in US 2007/0079649 A1. However, this type of construction results in a higher amount of material and higher production costs.

Irrespective of the type of housing, filtration devices built of stackable plates equipped with flat filters, especially filter membranes, with different variants of plate geometry are known. One of the main challenges of such filtration devices is to build an upstream side and a downstream side that are separated through a filter membrane and to generate a flow path that leads through the sealed membrane from the upstream side to the downstream side. This flow path can be created in different ways: The flow through the device can be led through outer sections of the device (not centrally), as shown in WO 2009/045264 A2, for example, or through the middle of the device (centrally), what is typical of round-shaped filter devices. In filter devices with a central fluid collection different sizes of membrane stamps or an additional part welded onto the disc can be used to guide the filtrate into the center and to the outlet of the device.

US 4 940 562 A shows a filter element including several supporting plates. On the obverse and reverse surfaces of the supporting plates projected parts are formed which serve the purpose of supporting planar porous membranes and forming flow paths for a purified fluid. Unit members are constructed by tightly joining the porous membranes with thermally fusing means to outer circumferential edge parts of the supporting plates and also to circumferential edges of openings for insertion of annular spacers and for removal of a purified fluid. The unit members and the spacers interposed one each between the adjacent unit members are interconnected by tightly joining the supporting plates and the spacers at the positions of first and second seal parts by means of thermal fusion. The second seal parts are formed between stepped parts formed on the inner circumferential part of the spacers and inner circumferential surfaces of the openings of the unit members and are used to join the stepped parts and the inner circumferential surfaces by fusion. The first seal parts are formed between outer circumferential parts of the spacers and stepped parts formed on the circumferential edges of the openings of the supporting plates and are used to join the outer circumferential parts and the stepped parts by fusion. Since the sealing zones are directly adjacent to the grooves formed in the spacers, which serve as flow paths for removing the purified fluid, there is a risk that the flow paths are obstructed or that the geometry leads to a crack initiation and thus causes an earlier cracking of the component.

All these variants described above have in common that they are not optimal to efficiently achieve a high burst pressure with a low hold-up volume (total inner volume where fluid can reside). Low hold-up volume is particularly crucial for small volume batches, in order to avoid high losses due to filtrate remaining in the filtration device.

It is an object of the invention to overcome the drawbacks of the known designs of filtration devices and to provide a reliable filtration device, especially a small-scale filtration device for production of biopharmaceuticals, with a low hold-up volume and a high pressure resistance.

This is achieved with a filtration device according to claim 1 and with a method of manufacturing a filtration device according to claim 10. Advantageous and expedient embodiments of the invention are apparent from the respective dependent claims.

The invention provides a filtration device, in particular a small-scale filtration device for production of biopharmaceuticals. The filtration device according to the invention comprises a top cover having an unfiltrate inlet and a bottom cover having a filtrate outlet, and one or more filter supports arranged as a stack between the top cover and the bottom cover along a vertical direction. Each filter support is configured to support a flat filter, especially a membrane. The filter support(s) are provided on the top cover and/or on the bottom cover and/or on one or more optional, preferably disc-shaped, filter support plates. The top cover, the bottom cover and the filter support plates each have an inner portion with at least one inner welding section and an outer portion with at least one outer welding section. The inner welding sections have an annular shape fully encircling a vertical filtrate collection channel of the filtration device which leads to the filtrate outlet. The outer welding sections have an annular shape fully encircling a filtration area of the filtration device. All inner welding sections are substantially congruent and welded in a fluid-tight manner to a corresponding inner welding section of the top cover or bottom cover or a neighboring filter support plate, so as to form an inner housing portion of the filtration device. All outer welding sections are substantially congruent and welded in a fluid-tight manner to a corresponding outer welding section of the top cover or bottom cover or a neighboring filter support plate, so as to form an outer housing portion of the filtration device.

The invention is based on the finding that a stable connection inside the filtration device allows a significant increase of the inner pressure load that can be applied to the filtration device. One of the basic concepts of the invention is to provide a housing with continuous (non-interrupted) walls (as far as possible) that have a constant distance from a central vertical axis along the vertical height of the filtration device, so that the load can efficiently be transferred between the top cover and the bottom cover, in correspondence with the direction of the applied load. This is achieved by the substantially congruent annular welding sections of the top cover, the bottom cover and the filter support plate(s), if any. With respect to the filter support plate(s), inner and outer welding sections are formed on both sides thereof. Thus, the round shape of the inner housing portion follows the round shape of the outer housing portion. The resulting cylindrical, preferably circular-cylindrical, housing structure is an optimum compromise between pressure stability on the one hand and a low hold-up volume on the other hand, without the need for an additional outer housing.

With respect to the terms "vertical direction" and "vertical axis", it is to be understood that the filtration device is designed such that gravity at least assists the flow of fluid to be filtered through the device from the unfiltrate inlet to the filtrate outlet. Accordingly, the typical use position of the filtration device is an upright position with the top cover located above the filter support plate(s) and the bottom cover. Of course, it is not necessary that the "vertical direction" or the "vertical axis" is perfectly vertical. Moreover, the filtration device may also be used in other positions, such as in a horizontal orientation, since the medium is mainly urged through the filtration device by an externally applied pressure. Thus, also terms like "top," "bottom," "upper," and "lower" are not to be understood in a limiting sense; they are mainly used to indicate positions opposite to another, such as an upper side and a lower side of a filter support plate.

As mentioned above, the welding sections of the components are substantially congruent. In the given context, "substantially congruent" means that there must be a significant overlap of the welding sections when viewed top-down or down-top, but the welding sections do not necessarily need to have a perfect 100% overlap.

A "filtration area" in the sense of the invention is an area of the filtration device, or, more particularly, an area of the top cover and/or the bottom cover and/or the filter support plate(s), where the fluid is collected after having passed through a filter placed on a filter support.

Preferably, one end of the vertical filtrate collection channel on the bottom side of the filtration device leads to the filtrate outlet, whereas the other end of the vertical filtrate collection channel is closed by a blocking element, which is preferably the top cover or a part thereof. The blocking element serves to avoid inter-mixing of filtrate and unfiltrate in the area of the unfiltrate inlet.

According to an independent aspect of the invention, the filtration device can be built without any filter support plates, especially when only a relatively small overall filter area is required. In this case, only the bottom cover has a filter support that supports a flat filter and has filtrate collecting channels, and the top cover is directly welded to the bottom cover via their inner and outer welding sections. It is generally possible that even the top cover has a filter support with filtrate collecting channels.

In order to completely avoid any interference between the part of the flow path that leads to the vertical filtrate collection channel and the inner welding sections, at least one filtrate duct extending through the inner portion of the filter support plate and leading to the vertical filtrate collection channel is provided. The filtrate duct is formed as a tunnel between the inner welding section on the upper side of the filter support plate and the inner welding section on the lower side of the filter support plate. Accordingly, the filtrate duct is not directly adjacent to any inner welding section. This is important for two reasons: On the one hand, when the top and bottom covers and the filter support plate(s) are joined together during assembly of the filtration device, preferably by welding, no molten material can inadvertently enter the filtrate duct and obstruct or even block the flow path later. On the other hand, the formation of the filtrate duct and the fluid passing through the filtrate duct during use of the filtration device cannot impair the robustness of the filtration device or the sealing provided at the welding sections. Since the tunnel-like filtrate duct is not formed on any of the surfaces of the welding sections, the risk of crack initiation is significantly decreased, and thus the burst pressure of the filtration device is increased.

While tunnel-like filtrate ducts extending through the inner portion of the filter support provide significant advantages, it is not easy to manufacture a filter support plate with such filtrate ducts, especially when the filter support is produced by injection molding. Each duct or channel or any other cavity must be filled with a metal core during the injection molding process, and the design must allow that the cores can be pulled out of the finished plastic part later. Another fundamental problem with long thin ducts or channels in injection molding is the stability of the required metal cores. The longer and thinner these cores are, the more likely it is that they will be pushed away and damaged during the injection of the molten plastic material.

In order to avoid this problem, the invention provides a new design concept for the filter support plate: The inner portion of the filter support plate is formed as a separate center part configured to be connected to an outer part of the filter support plate via a connection mechanism later. This means that the inner portion of the filter support plate, which includes the inner welding sections and the at least one tunnel-like filtrate duct, is produced as a separate part independent of the rest of the filter support plate.

Bucking the trend of reducing the number of components, dividing the filter support plate into at least two separate parts that are connected later provides several advantages. The design of the center part is far less complex than that of the entire filter support plate, and thus the requirements related to the metal cores are less complicated. Especially the filtrate duct only extends over a short length to pass the distance from the filtration area of the device to the vertical filtrate collecting channel between the upper and lower inner welding sections of the filter support plate. Accordingly, such a duct can be produced by injection molding without any significant risk of the corresponding core being pushed away or damaged.

According to a particularly advantageous aspect of the two-piece design of the filter support plate, an outer end of the at least one filtrate duct of the center part (opposite to an inner end leading into the vertical filtrate collection channel) is open to the outside and is fluidically connected to the filtration area only when the center part is connected to the outer part. In particular, the outer end of the filtrate duct of the center part can become fluidically connected to vertical through passages formed between the center part and the outer part, into which filtrate collecting channels of the outer part lead. In any event, in the manufacturing process of the filter support plate the open outer end of the filtrate duct allows easy removal of the core after the molding step. In this context, also the direction in which the core has to be pulled out plays a role. If the filter support plate was made in one piece, the core would have to be set at an angle, which would further complicate the design and the connection to the filtration area.

The connection mechanism, which establishes the connection of the center part and the outer part when the filter support plate is assembled, can include a bayonet mount and/or a clipping or latching structure, allowing an easy assembly and, optionally, an easy disassembly for recycling purposes, for example. However, other connection techniques are not ruled out.

In accordance with the two-piece design of the filter support plate, the at least one flat filter is sealed both to the center part and to the outer part along at least two sealing zones, a first inner sealing zone being located outside the inner welding section of the filter support plate and a second outer sealing zone being located inside the outer welding section of the same filter support plate on the same side thereof, which means that the filter support extends over the gap between the center part and the outer part. Since the flat filters cover this gap, there is no need for additional sealing in this area. The same applies to a filter support and filter provided on the other side of the filter support plate, if any.

Preferably, the top and bottom covers and the filter support plates have a circular outer periphery, in accordance with the optimum compromise between an even load distribution and a low hold-up volume.

In order to avoid any additional efforts and confusion related to different geometric designs of the flat filters to be used in the filtration device, a plurality of flat filters can be employed in the filtration device that are shaped substantially identically. This means that the two-dimensional size and shape of the flat filters is identical (at least within manufacturing tolerances), whereas material, pore size, (vertical) thickness, number of layers, and other parameters of the flat filters may vary according to the desired filtration process to be conducted in the filtration device.

The invention also provides a filter support plate, configured to be used in a filtration device, preferably in a small-scale filtration device for production of biopharmaceuticals. The filter support plate has an upper side and a lower side, and comprises one or two filter supports formed on the upper side and/or the lower side of the filter support plate, and an inner portion and an outer portion. The inner portion includes an inner welding section on the upper side and an inner welding section on the lower side of the filter support plate. The inner welding sections have an annular shape fully encircling a section of a vertical filtrate collection channel configured to lead filtrate to a filtrate outlet of the filtration device. The inner portion further includes at least one filtrate duct extending through the inner portion of the filter support plate and leading to the section of the vertical filtrate collection channel. The at least one filtrate duct is formed as a tunnel between the inner welding section on the upper side of the filter support plate and the inner welding section on the lower side of the filter support plate. The inner portion of the filter support plate is formed as a separate center part configured to be connected to an outer part of the filter support plate via a connection mechanism.

As already explained, the inner portion of the filter support plate, which includes the inner welding sections and the at least one tunnel-like filtrate duct, is produced as a separate part independent of the rest of the filter support plate.

As described above, all welding sections are substantially congruent and can be welded in a fluid-tight manner to a corresponding welding section of the top cover or bottom cover or a neighboring filter support plate.

According to a first housing concept of the filtration device, the outer part includes an outer welding section on the upper side and an outer welding section on the lower side of the filter support plate, the outer welding sections having an annular shape fully encircling a filtration area of the filter support plate. This means that the housing of the filtration device is formed, at least in part, by the outer welding sections of the filter support plates that can be welded in a fluid-tight manner to corresponding outer welding sections of neighboring filter support plates or to a corresponding outer welding section of the top cover and/or the bottom cover. With this concept, an additional housing component is not necessary, and the overall size of the filtration device is minimized, only depending on the number of filter support plates.

According to a second housing concept, the filter support plates are surrounded by an annular wall of a housing component that is connected to the top cover and the bottom cover. This means that an additional housing component is provided which can ensure a great overall stability of the filtration device.

Preferably, an outer end of the at least one filtrate duct of the center part is open to the outside and is fluidically connected to the filtration area when the center part is connected to the outer part. In particular, the outer end of the filtrate duct of the center part can become fluidically connected to vertical through passages formed between the center part and the outer part, into which filtrate collecting channels of the outer part lead. In any event, in the manufacturing process of the filter support plate the open outer end of the filtrate duct allows easy removal of the core after the molding step.

In view of the preferred round-shaped design of the filtration device, the filter support plate preferably is disc-shaped.

The invention also provides a method of manufacturing a filtration device, in particular a small-scale filtration device for production of biopharmaceuticals. The method according to the invention comprising the following steps:
- providing a top cover having an unfiltrate inlet, a bottom cover having a filtrate outlet, and one or more optional, preferably disc-shaped, filter support plates; the top cover, the bottom cover and the filter support plates each having an inner portion with at least one inner welding section and an outer portion with at least one outer welding section; the inner welding sections having an annular shape fully encircling a vertical filtrate collection channel of the filtration device which leads to the filtrate outlet; the outer welding sections having an annular shape fully encircling a filtration area of the filtration device;
- stacking the filter support plates between the top cover and the bottom cover along a vertical direction;
- equipping at least one of the top cover, the bottom cover and the filter support plates with at least one flat filter, especially a membrane;
- welding each inner welding section in a fluid-tight manner to a corresponding inner welding section of the top cover or bottom cover or a neighboring filter support plate, so as to form an inner housing portion of the filtration device; and
- welding each outer welding section in a fluid-tight manner to a corresponding outer welding section of the top cover or bottom cover or a neighboring filter support plate, so as to form an outer housing portion of the filtration device.

Preferably, the filtration device comprises at least one filter support plate having at least one filtrate duct extending through the inner portion of the filter support plate and leading to the vertical filtrate collection channel, the filtrate duct being formed as a tunnel between an inner welding section on the upper side of the filter support plate and an inner welding section on the lower side of the filter support plate. According to an advantageous aspect of the invention, the step of providing the at least one filter support plate comprises the following further steps:
- forming a center part of the filter support plate including the inner portion with the at least one inner welding section and the at least one filtrate duct by injection molding;
- separately forming an outer part of the filter support plate including the at least one outer welding section; and
- connecting the center part to the outer part so that the at least one filtrate duct is fluidically connected to the filtration area.

This means that the center part and the outer part are manufactured separately, preferably by injection molding, so that the filtrate ducts of the center part can be easily formed during the molding process.

Further features and advantages of the invention will become apparent from the following description and from the accompanying drawings to which reference is made. In the drawings:
- Figure 1 shows a perspective sectional view of a small-scale filtration device according to the invention;
- Figure 2 shows a partially transparent top view of the filtration device;
- Figure 3 shows a perspective top view of a filter support plate of the filtration device in an assembled state;
- Figure 4 shows a perspective sectional view of the filter support plate in the assembled state supporting two membranes;
- Figure 5 shows a detail of a perspective partial sectional view of the filter support plate in the assembled state; and
- Figure 6 shows a perspective top view of the filter support plate in a disassembled state;
- Figure 7 shows a side view of the center part of the filter support plate; and
- Figure 8 shows a detail of a perspective partial sectional view of the filter support plate with the membranes in the assembled state.

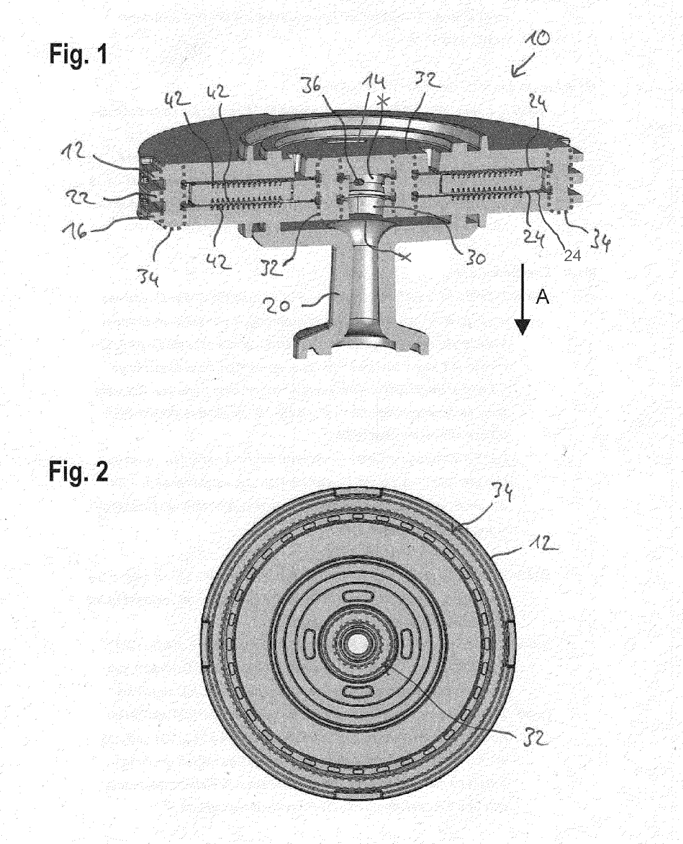

In Figures 1 and 2 a small-scale filtration device 10 for production of biopharmaceuticals is shown. The filtration device 10 comprises a top cover 12 having a central unfiltrate inlet (not shown) leading to inflow openings 14 and a bottom cover 16 having a central filtrate outlet 20. Between the top cover 12 and the bottom cover 16 a filter support plate 22 is positioned. Here, the filter support plate 22 is disc-shaped.

Depending on the desired filter area, not only one, but a plurality of identical filter support plates 22 can be stacked between the top cover 12 and the bottom cover 16. On the other hand, it is generally possible to build the filtration device 10 without any filter support plates 22, i. e. only with a top cover 12 and a bottom cover 16.

The top cover 12, the bottom cover 16 and the filter support plates 22 each have a circular outer periphery. In case of more than one filter support plate 22, the identical filter support plates 22 are stacked along a vertical direction A, which also indicates the general flow direction of the fluid to be filtered through the filtration device 10 in the typical use position of the filtration device 10. Terms like "top", "bottom", "upper", "lower" etc. relate to an upright use position of the filtration device 10 and the vertical direction A shown in Figure 1.

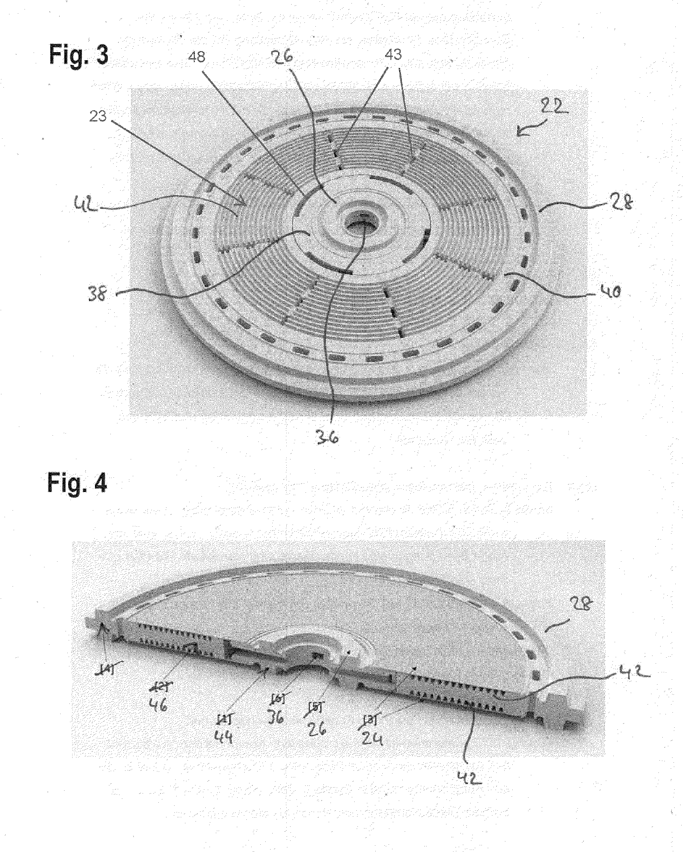

Each filter support plate 22 has two similarly shaped filter supports 23, one on its upper side (see Figure 3) and another one on its lower side. The filter supports 23 of the filter support plate 22 are configured to support two substantially identically shaped flat filters 24, in particular round-shaped filter membranes. "Substantially identically shaped flat filters" mainly refers to the two-dimensional size and/or shape of the flat filters 24, whereas material, pore size, (vertical) thickness, number of layers, and other parameters may vary. According to the setup shown in Figure 1, the bottom cover 16 also has one filter support 23 configured to support such a flat filter 24. (It is to be noted that in Figure 1 the flat filters are not explicitly shown; the corresponding reference numerals 24 only indicate the positions of the flat filters in the filtration device.)

The top cover 12, the bottom cover 16 and the filter support plate(s) 22, if any, are welded together to form the filtration device 10. In particular, the top cover 12, the bottom cover 16 and each filter support plate 22 have an inner portion with an inner welding section 26 and an outer portion with an outer welding section 28. The inner and outer welding sections 26, 28 of the upper side of the filter support plate 22 can be seen in Figure 3. The inner welding sections 26 have an annular shape fully encircling a central vertical filtrate collection channel 30 (see Figure 1), which leads to the central filtrate outlet 20 (but is closed off from the unfiltrate inlet). The outer welding sections 28 have an annular shape fully encircling a filtration area of the filtration device 10.

The inner welding sections 26 of the top cover 12, the bottom cover 16 and each filter support plate 22 are substantially congruent, and the same is true for the outer welding sections 28. In the embodiment shown in Figure 1, the welding sections 26, 28 of the top cover 12 are welded in a fluid-tight manner to the corresponding welding sections 26, 28 on the upper side of the filter support plate 22, and the welding sections 26, 28 on the lower side of the filter support plate 22 are welded in a fluid-tight manner to the corresponding welding sections 26, 28 of the bottom cover 16. In an embodiment without any filter support plates 22, the welding sections 26, 28 of the top cover 12 are welded in a fluid-tight manner to the corresponding welding sections 26, 28 of the bottom cover 16. In embodiments with more than one filter support plate 22, the welding sections 26, 28 of each filter support plate 22 are welded in a fluid-tight manner to the corresponding welding sections 26, 28 of the neighboring filter support plates 22, except for the uppermost filter support plate 22, whose upper welding sections 26, 28 are welded in a fluid-tight manner to the corresponding welding sections 26, 28 of the top cover 12, and the lowest filter support plate 22, whose lower welding sections 26, 28 are welded in a fluid-tight manner to the corresponding welding sections 26, 28 of the bottom cover 16.

In any event, the congruent welding sections 26, 28 ensure that a robust, cylindrical, tube-like housing structure is produced when the top cover 12, the bottom cover 16 and the filter support plate(s) 22, if any, are welded together. In particular, a cylindrical inner housing portion 32 including the inner welding sections 26 and a cylindrical outer housing portion 34 including the outer welding sections 28 are formed, as shown in Figures 1 and 2. The distance of the thus formed walls of the inner and outer housing portions 32, 34 from the central vertical axis remains the same along the vertical height of the housing structure.

It is to be noted that, preferably, the inner and outer housing portions 32, 34 are not interrupted by cavities, recesses or the like, except for one or more filtrate ducts 36 formed in the inner portion of the filter support plate 22, which will be described in more detail later. Accordingly, the filtration device 10 can withstand comparatively high pressures since the load can be evenly distributed over the inner and outer housing portions 32, 34 without stress peaks and bending moments.

As can be seen in Figure 3, each filter support plate 22 has an inner sealing zone 38 formed in the inner portion but outside of the inner welding section 26, and an outer sealing zone 40 formed in the outer portion but inside of the outer welding section 28 of the filter support plate 22. A flat filter 24 is sealed to the inner and outer sealing zones 38, 40 and covers (mainly horizontal) filtrate collecting channels 42 of the filter support 23 as well as optional vertical through holes 43 providing connections between the filtrate collecting channels 42 of both sides of the filter support plate 22, as shown in Figure 4. Sealing zones 38, 40 and filtrate collecting channels 42 are formed in the filter supports 23 on both sides of the filter support plate 22, and a flat filter 24 is sealed to the filter support 23 on both sides of the filter support plate 22.

Similar to the filter support plate 22, the bottom cover 16, and/or even the top cover 12, can be provided with a filter support 23 having filtrate collecting channels 42. The filter support(s) 23 of the bottom cover 16 and/or the top cover 12 face(s) the inside of the filtration device 10 with (a) flat filter(s) 24 being sealed to the corresponding filter support(s) 23. Alternatively, or in addition, the top cover 12 and/or the bottom cover 16 can have other distribution channels than the filtrate collecting channels 42 for guiding the unfiltrate and/or the filtrate, respectively.

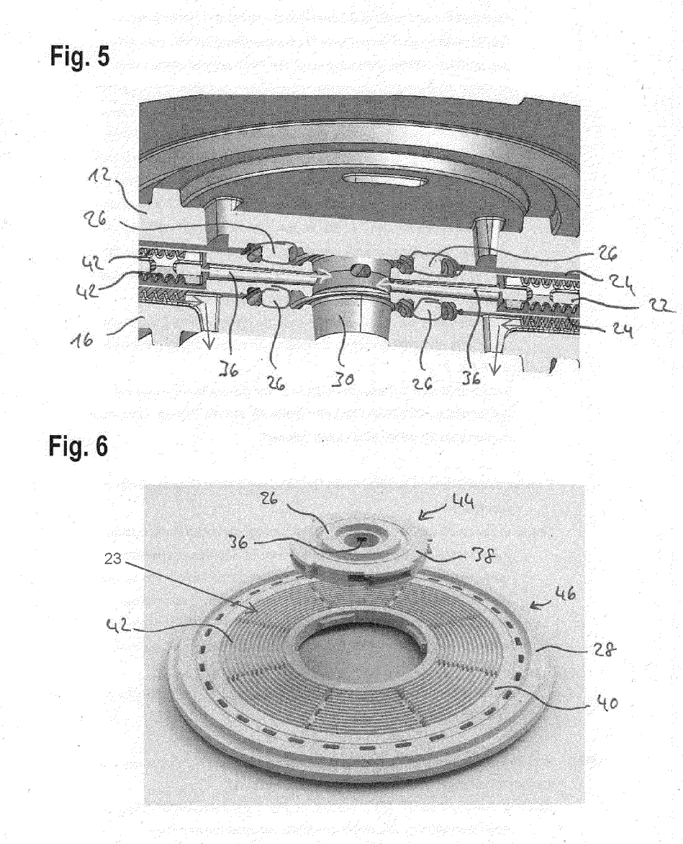

The exact flow path of the fluid flowing through the filtration device 10 is not essential to the invention. However, it is important to understand that the unfiltrate, after having entered through the central unfiltrate inlet and the inflow openings 14, is blocked from the vertical filtrate collection channel 30 so that it cannot bypass the flat filters 24 and leave through the central filtrate outlet 20. Only after the unfiltrate has passed through one of the flat filters 24, thus becoming the filtrate, it must be guided to the vertical filtrate collection channel 30 to leave the filtration device 10 through the central filtrate outlet 20 (in case of a flat filter 24 supported on a filter support 23 of the bottom cover 16, the fluid is directly guided to the filtrate outlet 20 through outflow holes, as shown in Figure 5).

In the following, the part of the flow path towards the vertical filtrate collection channel 30 is described in more detail in connection with embodiments having at least one filter support plate 22.

From the filtrate collecting channels 42 of a filter support 23 of a filter support plate 22, the filtrate is finally guided to one or more filtrate ducts 36 that extend through the inner portion of the filter support plate 22 and lead to the vertical filtrate collection channel 30. As can be seen in Figures 4 and 5, the filtrate ducts 36 are formed as tunnels between the inner welding section 26 on the upper side of the filter support plate 22 and the inner welding section 26 on the lower side of the filter support plate 22. Therefore, the filtrate ducts 36 cannot interfere with the inner welding sections 26, and, in turn, no material can accidentally enter the filtrate ducts 36 when the filter support plate 22 is welded to another filter support plate 22 or to the top cover 12 or to the bottom cover 16. Moreover, the tunnel design does not bring an offset to the inner welding sections 26 and avoids open grooves or recesses adjacent to or within the welded area that could lead to weaknesses in the cross section of the inner housing portion 32.

Due to the special design and location of the filtrate ducts 36, the filter support plate 22 cannot, or at least not easily, be produced in one piece by common manufacturing techniques such as injection molding. Therefore, the filter support plate 22 is made of at least two separate pieces. Here, the filter support plate 22 comprises a center part 44 and an outer part 46, as shown in Figure 6.

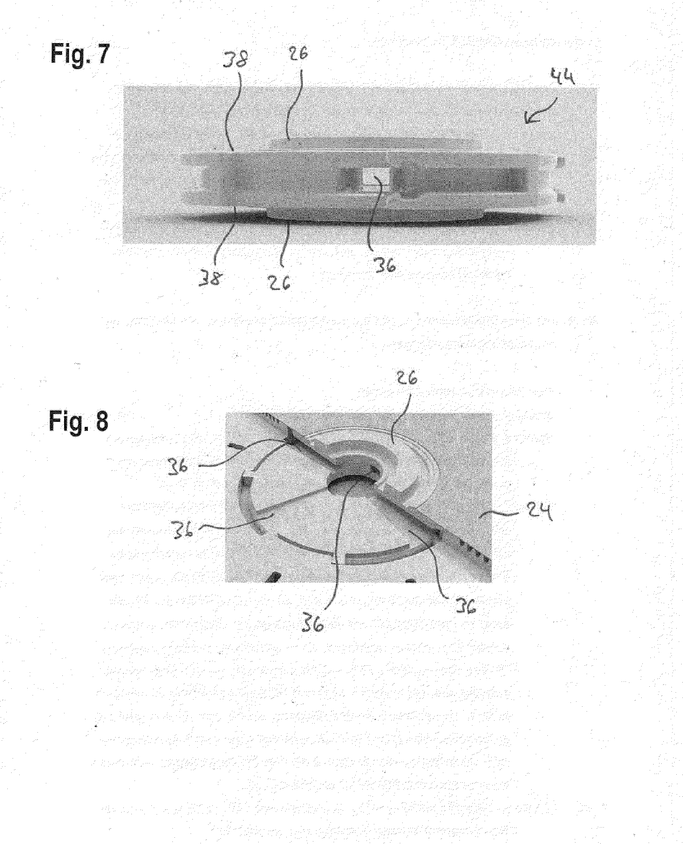

The center part 44, which is shown separately in Figure 7, corresponds to the inner portion including the inner welding sections 26, the inner sealing zones 38 and the tunnel-like filtrate ducts 36 (see also Figure 8). With the center part 44 being a separate part, it is possible to form the tunnel-like filtrate ducts 36 during the manufacturing of the center part 44, especially when it is produced by injection molding. The outer ends of the filtrate ducts 36 (opposite to the inner ends leading into the vertical filtrate collection channel 30) are open to the outside.

The outer part 46 corresponds to the outer portion and includes the rest of the filter support plate 22.

The center part 44 of the filter support plate 22 is connected to the outer part 46 of the filter support plate 22 via a connection mechanism. The connection mechanism can be realized as a bayonet mount and/or with clipping or latching structures. Other connection techniques can be used as well, such as gluing, pressing, riveting and/or (spot) welding.

When the center part 44 is connected to the outer part 46 of the filter support plate 22, the filtrate duct 36 becomes fluidically connected to the filtration area of the filtration device 10. In particular, after assembly of the filter support plate 22, vertical through passages 48 are created between the center part 44 and the outer part 46, as shown in Figure 3. The through passages 48 are connected to the tunnel-like filtrate ducts 36 and ensure that the filtrate can flow from both sides of the filter support plate 22 to the filtrate ducts 36 and finally into the vertical filtrate collection channel 30.

The hold-up volume of a filtration device 10 built as described above can be expected as less than 0.5 ml per cm² of filter area, preferably less than 0.4 ml per cm² of filter area, more preferably from 0.3 to 0.1 ml per cm² of filter area, most preferred from 0.22 to 0.11 ml per cm² of filter area.

The burst pressure of a filtration device 10 built as described above can be expected as follows, depending on the desired overall filter area: 1) Variant with 20 cm² filter area: burst pressure approx. 12 bar. 2) Variants with 60 cm² filter area and more: burst pressure approx. 13-14 bar. The burst pressures are significantly high, taking into account that known filtration devices made from the same material and having similar filter areas require additional means, such as stiffening ribs, to achieve similar burst pressures. Moreover, known filtration devices with a comparable performance and total inner volume usually are not modular, i.e. they do not have stackable filter support plates, and their surfaces are not easily wipeable.

The filtration device 10 according to the invention can be conceived as a single-use device. This means that all components of the filtration device 10 are preferably made from plastic materials which are suitable for typical sterilization techniques, especially gamma sterilization (irradiation) and/or chemical sterilization, e.g. with ethylene oxide (ETO). "Suitable" here means that the relevant material properties, such as stability and/or brittleness etc., are not significantly affected by the sterilization process. A suitable material, especially for the top cover 12, the bottom cover 16 and the filter support plates 22, is, for example, polypropylene (PP), which is a thermoplastic polymer and partially crystalline. Other suitable plastic materials fulfilling all or at least some of the above criteria and which can be injection molded and connected to a flat filter membrane and then welded, glued or otherwise joined in a media-tight manner, include: polyethylene (PE); polyethylene terephthalate (PET); polyester (PES); polyethersulfone (PESU); polysulfone (PSU); acrylic butadiene styrene (ABS); polycarbonate (PC).

### List of Reference Signs

- 10: filtration device
- 12: top cover
- 14: inflow openings
- 16: bottom cover
- 20: filtrate outlet
- 22: filter support plate
- 23: filter support
- 24: flat filter
- 26: inner welding section
- 28: outer welding section
- 30: vertical filtrate collection channel
- 32: inner housing portion
- 34: outer housing portion
- 36: filtrate duct
- 38: inner sealing zone
- 40: outer sealing zone
- 42: filtrate collecting channels
- 43: through holes
- 44: center part
- 46: outer part
- 48: through passages
- A: vertical direction

## Claims

1. A filtration device (10), in particular a small-scale filtration device for production of biopharmaceuticals, the filtration device (10) comprising
a top cover (12) having an unfiltrate inlet and a bottom cover (16) having a filtrate outlet (20), and
one or more filter supports (23) arranged as a stack between the top cover (12) and the bottom cover (16) along a vertical direction (A),
each filter support (23) being configured to support a flat filter (24), especially a membrane,
the filter support(s) (23) being provided on the top cover (12) and/or on the bottom cover (16) and or on one or more optional, preferably disc-shaped, filter support plates (22),
the top cover (12), the bottom cover (16) and the filter support plates (22) each having an inner portion with at least one inner welding section (26) and an outer portion with at least one outer welding section (28),
the inner welding sections (26) having an annular shape fully encircling a vertical filtrate collection channel (30) of the filtration device (10) which leads to the filtrate outlet (20),
the outer welding sections (28) having an annular shape fully encircling a filtration area of the filtration device (10),
all inner welding sections (26) being substantially congruent and welded in a fluid-tight manner to a corresponding inner welding section (26) of the top cover (12) or bottom cover (16) or a neighboring filter support plate (22), so as to form an inner housing portion (32) of the filtration device (10), and
all outer welding sections (28) being substantially congruent and welded in a fluid-tight manner to a corresponding outer welding section (28) of the top cover (12) or bottom cover (16) or a neighboring filter support plate (22), so as to form an outer housing portion (34) of the filtration device (10).

2. The filtration device (10) according to claim 1, **characterized in that** the filtration device (10) comprises at least one filter support plate (22) having at least one filtrate duct (36) extending through the inner portion of the filter support plate (22) and leading to the vertical filtrate collection channel (30), the filtrate duct (36) being formed as a tunnel between an inner welding section (26) on the upper side of the filter support plate (22) and an inner welding section (26) on the lower side of the filter support plate (22).

3. The filtration device (10) according to claim 2, **characterized in that** the inner portion of the filter support plate (22) is formed as a separate center part (44) configured to be connected to an outer part (46) of the filter support plate (22) via a connection mechanism.

4. The filtration device (10) according to claim 3, **characterized in that** an outer end of the at least one filtrate duct (36) of the center part (44) is open to the outside and is fluidically connected to the filtration area when the center part is connected to the outer part (46).

5. The filtration device (10) according to claim 3 or 4, **characterized in that** the connection mechanism includes a bayonet mount.

6. The filtration device (10) according to any of claims 3 to 5, **characterized in that** the connection mechanism includes a clipping or latching structure.

7. The filtration device (10) according to any of claims 3 to 6, **characterized in that** at least one flat filter (24) is sealed both to the center part (44) and to the outer part (46) along at least two sealing zones, a first inner sealing zone (38) being located outside the inner welding section (26) of the filter support plate (22) and a second outer sealing zone (40) being located inside the outer welding section (28) of the filter support plate (22).

8. The filtration device (10) according to any of the preceding claims, **characterized in that** the top cover (12), the bottom cover (16) and the filter support plates (22) have a circular outer periphery.

9. The filtration device (10) according to any of the preceding claims, **characterized in that** the filtration device (10) comprises a plurality of flat filters (24) that are shaped substantially identically.

10. A filter support plate (22), configured to be used in a filtration device (10), preferably in a small-scale filtration device (10) for production of biopharmaceuticals, the filter support plate (22) having an upper side and a lower side, and comprising
one or two filter supports (23) formed on the upper side and/or the lower side of the filter support plate (22),
an inner portion and an outer portion,
the inner portion including an inner welding section (26) on the upper side and an inner welding section (26) on the lower side of the filter support plate (22),
the inner welding sections (26) having an annular shape fully encircling a section of a vertical filtrate collection channel (30) configured to lead filtrate to a filtrate outlet (20) of the filtration device (10), and
at least one filtrate duct (36) extending through the inner portion of the filter support plate (22) and leading to the section of the vertical filtrate collection channel (30),
the at least one filtrate duct (36) being formed as a tunnel between the inner welding section (26) on the upper side of the filter support plate (22) and the inner welding section (26) on the lower side of the filter support plate (22),
the inner portion of the filter support plate (22) being formed as a separate center part (44) configured to be connected to an outer part (46) of the filter support plate (22) via a connection mechanism.

11. The filter support plate (22) according to claim 10, **characterized in that** the outer part (46) includes an outer welding section (28) on the upper side and an outer welding section (28) on the lower side of the filter support plate (22), the outer welding sections (28) having an annular shape fully encircling a filtration area of the filter support plate (22).

12. The filter support plate (22) according to claim 10 or 11, **characterized in that** an outer end of the at least one filtrate duct (36) of the center part (44) is open to the outside and is fluidically connected to the filtration area when the center part is connected to the outer part (46).

13. The filter support plate (22) according to any of claims 10 to 12, **characterized in that** the filter support plate (22) is disc-shaped.

14. A method of manufacturing a filtration device (10), in particular a small-scale filtration device for production of biopharmaceuticals, the method comprising the following steps:
- providing a top cover (12) having an unfiltrate inlet, a bottom cover (16) having a filtrate outlet (20), and one or more optional, preferably disc-shaped, filter support plates (22); the top cover (12), the bottom cover (16) and the filter support plates (22) each having an inner portion with at least one inner welding section (26) and an outer portion with at least one outer welding section (28); the inner welding sections (26) having an annular shape fully encircling a vertical filtrate collection channel (30) of the filtration device (10) which leads to the filtrate outlet (20); the outer welding sections (28) having an annular shape fully encircling a filtration area of the filtration device (10);
- optionally stacking the filter support plates (22) between the top cover (12) and the bottom cover (16) along a vertical direction (A);
- equipping at least one of the top cover (12), the bottom cover (16) and the filter support plates (22) with at least one flat filter (24), especially a membrane;
- welding each inner welding section (26) in a fluid-tight manner to a corresponding inner welding section (26) of the top cover (12) or bottom cover (16) or a neighboring filter support plate (22), so as to form an inner housing portion (32) of the filtration device (10); and
- welding each outer welding section (28) in a fluid-tight manner to a corresponding outer welding section (28) of the top cover (12) or bottom cover (16) or a neighboring filter support plate (22), so as to form an outer housing portion (34) of the filtration device (10).

15. The method according to claim 14, **characterized in that** the filtration device (10) comprises at least one filter support plate (22) having at least one filtrate duct (36) extending through the inner portion of the filter support plate (22) and leading to the vertical filtrate collection channel (30), the filtrate duct (36) being formed as a tunnel between an inner welding section (26) on the upper side of the filter support plate (22) and an inner welding section (26) on the lower side of the filter support plate (22), wherein the step of providing the at least one filter support plate (22) comprises the following further steps:
- forming a center part (44) of the filter support plate (22) including the inner portion with the at least one inner welding section (26) and the at least one filtrate duct (36) by injection molding;
- separately forming an outer part (46) of the filter support plate (22) including the at least one outer welding section (28); and
- connecting the center part (44) to the outer part (46) so that the at least one filtrate duct (36) is fluidically connected to the filtration area.
